# DEMANDE DE BREVET EUROPEEN

(11) **EP 0 672 586 A1**
(43) Date de publication de la demande: **20.09.1995**
(21) Numéro de dépôt: 95400569.0
(22) Date de dépôt: 15.03.1995
(51) Int. Cl.: B65B 15/00, B25H 3/04, A47J 47/16

(54) **Procédé de stockage et de conditionnement d'articles et broche pour la mise en oeuvre de ce procédé**

(30) Priorité: 17.03.1994 FR 9403132
(71) Demandeur: FRANPIN S.A., F-02260 La Capelle (FR)
(72) Inventeur: Japhet, Francis, F-02170 Fontenelle (FR)
(74) Mandataire: Texier, Christian

(57) **Abrégé**

La présente invention concerne un procédé de stockage et de conditionnement d'articles pourvus d'oeillets conçus pour être engagés sur des broches de présentation, en grands magasins, caractérisé par le fait qu'il comprend, l'étape consistant à disposer les articles sur une broche provisoire (100) comprenant deux butées (120, 130) conçues pour interdire tout retrait accidentel des articles, dont une butée amovible (130) permettant un retrait contrôlé desdits articles. L'invention concerne également une broche pour la mise en oeuvre de ce procédé.

## Description

La présente invention concerne le domaine de la distribution, notamment de la grande distribution.

On sait que de nos jours de nombreux magasins, notamment pour la grande distribution, utilisent des linéaires équipés de tiges de présentation individuelles ou de présentoirs complets comprenant des broches supports d'articles. Les articles sont pourvus chacun d'un oeillet par lequel ledit article est engagé sur la tige de présentation ou broche. Plus précisément, un tel oeillet peut être prévu dans l'article lui-même ou dans l'emballage de celui-ci.

Ce système de distribution a bien entendu rendu de grands services depuis de nombreuses années.

Cependant il pose un problème majeur : celui du réapprovisionnement.

Jusqu'ici le réapprovisionnement d'articles sur les tiges de présentation ou broches devait être réalisé manuellement, article par article. On comprend que le réapprovisionnement est par conséquent long et coûteux.

La présente invention a maintenant pour but d'améliorer cette technique de distribution.

Ce but est atteint dans le cadre de la présente invention grace à un procédé de stockage et de conditionnement d'articles pourvus d'oeillets conçus pour être engagés sur des broches de présentation dans un magasin, comprenant l'étape consistant à disposer les articles sur une broche provisoire comprenant deux butées conçues pour interdire tout retrait accidentel des articles, dont une butée amovible pour permettre un retrait contrôlé de ces derniers.

La présente invention concerne également la broche provisoire utilisée pour la mise en oeuvre du procédé précité.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue latérale d'une broche conforme à un mode de réalisation préférentiel de la présente invention,
- la figure 2 représente une vue de dessous de la même broche,
- la figure 3 représente une vue en coupe longitudinale de la même broche selon le plan de coupe référencé III-III sur la figure 4,
- les figures 4 et 5 représentent deux vues en bout opposées de la même broche,
- les figures 6, 7, 8 et 9 représentent respectivement des vues en coupe transversale selon les plans de coupe de référence VI-VI, VII-VII, VIII-VIII et IX-IX, sur la figure 1, de ladite broche, et
- les figures 10 et 11 représentent schématiquement deux étapes d'approvisionnement en articles d'une broche de magasin, à l'aide d'une broche provisoire conforme à la présente invention.

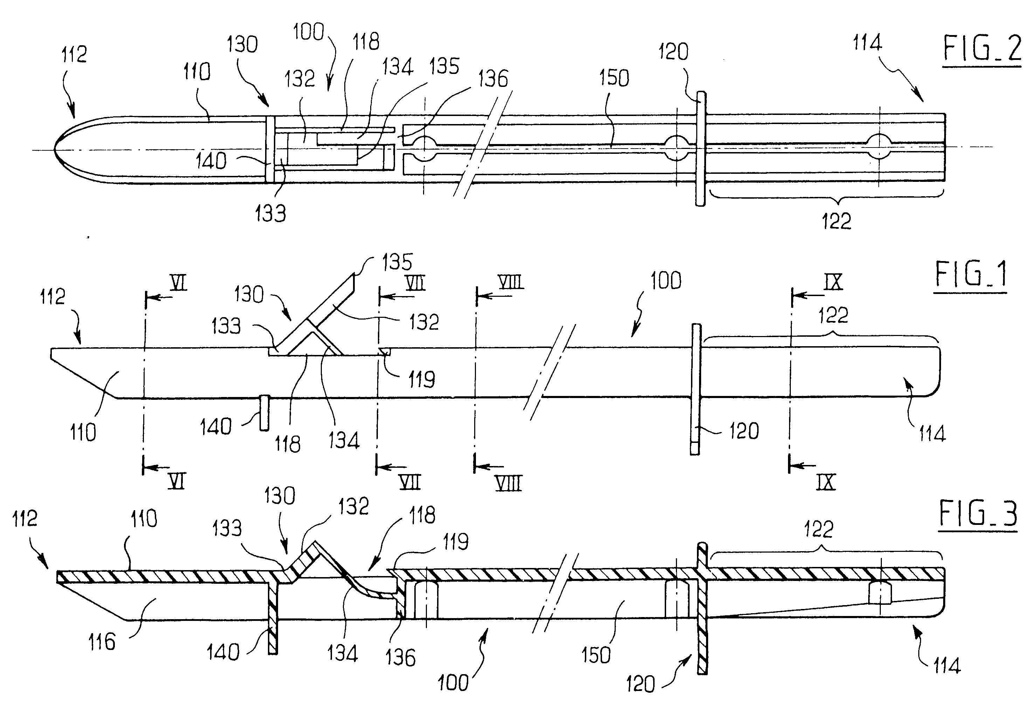

On va tout d'abord décrire la structure de la broche provisoire 100 conforme à la présente invention représentée sur les figures 1 à 9 annexées.

Cette broche 100 est réalisée de préférence sous forme d'une pièce unique, par moulage en matière plastique.

La broche 100 comprend une coquille allongée 110 de forme générale hémicylindrique. Plus précisément, la coquille 110 présente une section droite en U.

L'extrémité avant 112 de la broche 110 est avantageusement biseautée pour faciliter l'insertion d'articles sur ladite broche 100.

Plus précisément, la pointe du biseau formée à l'extrémité avant 112 de la broche 100 coïncide avec le sommet de la calotte cylindrique situé dans le plan de symétrie de la broche.

De même, comme on le voit notamment sur les figures 1 et 3, l'extrémité arrière 114 de la broche 100 est de préférence arrondie, au niveau des ailes latérales 115, 116 de la coquille en U 110.

La broche 100 est pourvue à proximité de son extrémité arrière 114, d'une première butée 120 en saillie sur sa surface extérieure. La section de la butée 120 est supérieure à la section droite des oeillets prévus dans les articles à conditionner de sorte que ceux-ci ne puissent pas franchir ladite butée 120.

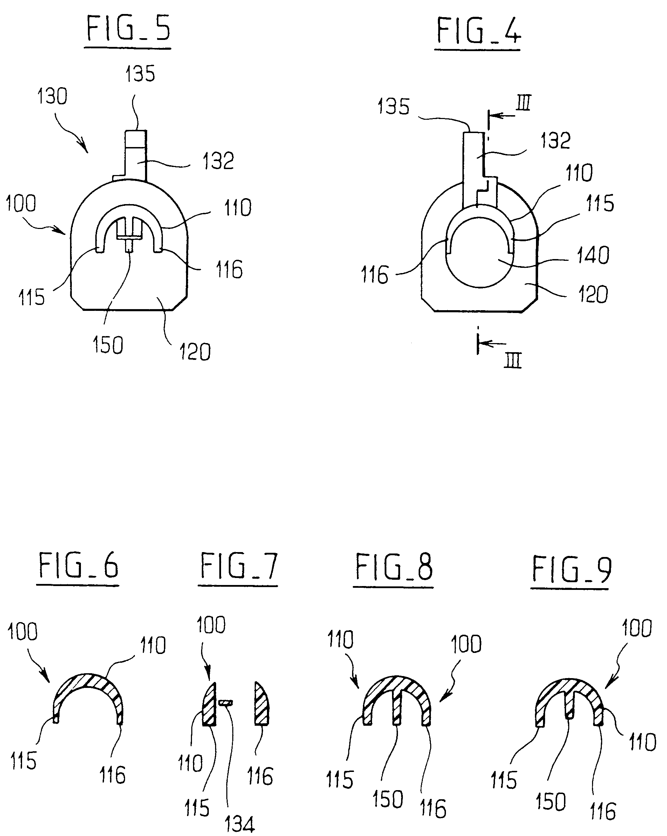

Cette butée 120 est formée de préférence d'une collerette généralement circulaire en saillie sur toute la périphérie de la broche 100, comme on le voit notamment sur les figures 4 et 5.

La zone de la broche 100, référencée 122, située entre la butée 120 et l'extrémité arrière 114 de la broche peut servir de poignée de préhension.

Par ailleurs, la broche 100 possède à proximité de son extrémité avant 112, une seconde butée 130. Toutefois, celle-ci est escamotable, pour permettre le passage contrôlé d'articles, dans un premier temps sur le corps de la broche 100 entre les deux butées 120, 130, pour un conditionnement, puis dans un second temps, vers l'extérieur de la broche 100, sur une broche de présentation d'un magasin.

La butée escamotable 130 peut faire l'objet de nombreux modes de réalisation.

Selon la variante de réalisation préférentielle représentée sur les figures annexées, la butée 130 comprend un loquet formé par moulage au niveau d'une fenêtre 118 ménagée dans le sommet de la calotte cylindrique de la coquille 110.

Plus précisément encore, le loquet 132 est associé à une jambe de force 134. Cette jambe 134 relie le sommet du loquet 132 à une cloison 136 formée dans le volume interne de la coquille 110.

La cloison 136 est de forme générale hémicirculaire et transversale à l'axe longitudinal de la broche.

Le loquet 132 est formé avantageusement d'une lame rigide et rectiligne. Celle-ci se raccorde sur le sommet de la calotte cylindrique, au niveau du bord de la fenêtre 118 adjacent à l'extrémité avant 112. Plus précisément encore, le loquet 132 se raccorde sur le bord de cette fenêtre 118 par l'intermédiaire d'une zone d'articulation 133 transversale à la direction longitudinale de la broche.

En position de repos, comme on le voit sur les figures 1 et 3, le loquet 132 diverge par rapport à la surface extérieure de la coquille 110, plus précisément par rapport au sommet de la calotte cylindrique composant celle-ci, en rapprochement de son extrémité libre et en direction de l'extrémité arrière 114.

La jambe 134 se raccorde quant à elle d'une part, sensiblement a mi-longueur sur le loquet 132, et d'autre part sur la face avant de la paroi 136, sensiblement à mi-hauteur de celle-ci. La jambe 134 présente une forme globalement concave vers le sommet de la calotte cylindrique composant la coquille 110.

De ce fait, la jambe 134 maintient en position de repos le loquet 132 en saillie sur la surface extérieure de la coquille 110.

Cependant, lorsqu'un utilisateur exerce une pression sur le loquet 132, la jambe 134 peut se déformer élastiquement pour permettre d'escamoter ledit loquet 132, dans la fenêtre 118.

La jambe 134 évite ainsi tout déplacement intempestif du loquet 132 en postion d'escamotage.

Selon une autre caractéristique avantageuse de l'invention, il est prévu de plus des moyens permettant de verrouiller temporairement le loquet 132 dans la fenêtre 118.

Pour cela selon le mode de réalisation préférentiel représenté sur les figures annexées, la fenêtre 118 possède sur son bord arrière une dent 119 en saillie et la longueur du loquet 132 est supérieure à la distance séparant la zone d'articulation 133 et le sommet de la dent 119.

Ainsi pour escamoter le loquet 132 dans la fenêtre 118, il suffit de pousser le loquet 132 dans la fenêtre de sorte que le sommet du loquet 132 franchisse élastiquement la dent 119. Le loquet 118 est poussé en appui contre la dent 119 par la jambe de force 134.

De préférence, la broche 100 possède en outre, dans sa partie concave interne, et à proximité de son extrémité avant 112, une cloison 140. Celle-ci s'étend transversalement à la direction longitudinale de la broche. Elle est destinée à venir en appui contre l'extrémité d'une broche de présentation sur un linéaire de magasin, pour faciliter le positionnement de la broche 100 et le transfert ultérieur des articles, à partir de la broche intermédiaire 100, vers la broche de présentation du magasin.

Bien entendu la cloison d'appui 140 doit posséder une section inférieure à celle des oeillets prévue dans les articles ou conditionnements de ceux-ci.

Selon le mode de réalisation particulier représenté sur les figures annexées, on voit notamment à l'examen de la figure 4 que cette cloison d'appui 140 possède une forme générale circulaire, prolongeant le rayon de courbure de la calotte hémicylindrique composant la coquille 110.

De préférence, la coquille 110 est munie également d'une nervure longitudinale de raidissement 150 visible en particulier sur les figures 2, 8 et 9.

Pour utiliser la broche 100 conforme à la présente invention, on procède essentiellement comme suit.

A la fabrication les différents articles sont enfilés successivement sur le corps de la broche 100, entre la butée fixe 120 et la butée escamotable 130. Pour cela, la butée 130 est escamotée lors du passage de chaque article.

Bien entendu, l'épaisseur cumulée des articles conditionnés sur une même broche ne doit pas dépasser la longueur séparant la butée fixe 120 du sommet 135 de la butée escamotable 132.

Les articles ainsi conditionnés sur la broche 100 peuvent aisément être stockés et transportés sur le site du magasin.

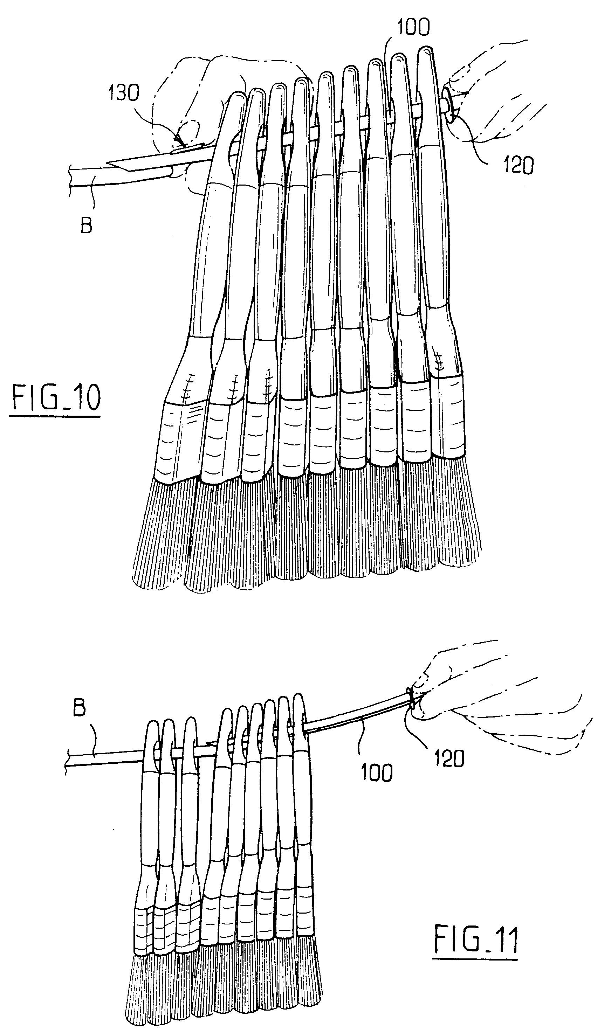

A ce niveau, pour réapprovisionner une broche de présentation correspondante, il suffit de placer l'extrémité avant de la coquille 110 de ladite broche provisoire sur l'extrémité d'une broche de présentation d'un linéaire de magasin, en plaçant de préférence l'extrémité de cette broche de présentation en appui contre la butée 140 de la broche provisoire. La broche provisoire 100 est ainsi positionnée et maintenue avec précision. Il suffit alors, comme on l'a représenté sur la figure 10, d'escamoter la butée 130 qui se verrouille dans la fenêtre 118 et de soulever légèrement l'extrémité arrière 114 de la broche provisoire (ou de pousser les articles) pour entraîner le glissement des différents articles sur la broche de présentation.

Sur les figures 10 et 11, une telle broche de présentation est référencée B.

On notera que la conception de la broche conforme à la présente invention permet de nombreuses réutilisations. Pour libérer la butée 130 de la fenêtre 118, il suffit en effet d'exercer une flexion sur l'extrémité 112 de la broche.

La présente invention permet ainsi un gain de temps très appréciable dans le réapprovisionnement des broches de présentation en magasin.

On peut noter que la broche 100 réalisée en matière plastique est très légère. Elle n'intervient donc pas de façon notable dans la masse de produits ou marchandises transportés.

La présente invention permet de garantir un produit présenté dans le bon sens au public, ce qui en pratique n'est pas toujours le cas jusqu'ici avec un réapprovisionnement manuel article par article.

Bien entendu, il est possible de réaliser des broches provisoires 100 présentant des distances différentes entre la butée escamotable 132 et la butée fixe 120, en fonction de l'encombrement des produits à présenter et de l'unité de vente désirée.

Bien entendu la présente invention n'est pas limitée au mode de réalisation particulier qui vient d'être décrit mais s'étend à toute variante conforme à son esprit.

## Revendications

1. Procédé de stockage et de conditionnement d'articles pourvus d'oeillets conçus pour être engagés sur des broches de présentation, en grands magasins, caractérisé par le fait qu'il comprend, l'étape consistant à disposer les articles sur une broche provisoire (100) comprenant deux butées (120, 130) conçues pour interdire tout retrait accidentel des articles, dont une butée amovible (130) permettant un retrait contrôlé desdits articles.

2. Procédé selon la revendication 1, caractérisé par le fait qu'il comprend l'étape consistant à placer la broche provisoire (100) en appui sur l'extrémité d'une broche de présentation (B), à escamoter la butée amovible (130) et à pousser les articles pour transférer ceux-ci de la broche provisoire (100) sur la broche de présentation (B).

3. Broche pour la mise en oeuvre du procédé conforme à l'une des revendications 1 ou 2, caractérisée par le fait qu'elle comprend deux butées (120, 130) conçues pour interdire tout retrait intempestif d'articles, dont une butée amovible (130) permettant, lorsqu'elle est escamotée, de transférer des articles de la broche provisoire (100) vers une broche de présentation (B).

4. Broche selon la revendication 3, caractérisée par le fait qu'elle est réalisée sous forme d'une pièce unique par moulage en matière plastique.

5. Broche selon l'une des revendications 3 ou 4, caractérisée par le fait qu'elle comprend une coquille hémicylindrique allongée (110).

6. Broche selon l'une des revendications 3 à 5, caractérisée par le fait qu'elle comprend une butée fixe (120) qui fait saillie sur toute la périphérie de celle-ci.

7. Broche selon l'une des revendications 3 à 6, caractérisée par le fait que la butée amovible (130) comprend un loquet (132) qui fait saillie au repos sur la surface extérieure de la broche, tout en étant susceptible d'être escamotée sous l'effet d'une sollicitation extérieure.

8. Broche selon la revendication 7, caractérisée par le fait que la loquet (130) est placé en regard d'une fenêtre (118) ménagée dans la broche (100).

9. Broche selon l'une des revendications 3 à 8, caractérisée par le fait que le loquet (130) est maintenu en position de repos en saillie par une jambe (134) venue de moulage.

10. Broche selon l'une des revendications 3 à 9, caractérisée par le fait qu'elle possède en outre, à proximité de son extrémité avant, une cloison transversale (140) pouvant servir d'appui à l'extrémité d'une broche de présentation (B).

11. Broche selon l'une des revendications 3 à 10, caractérisée par le fait qu'elle comprend une nervure de raidissement longitudinale interne (150).

12. Broche selon l'une des revendications 3 à 11, caractérisée par le fait qu'elle comprend des moyens (119) de verrouillage de la butée amovible (130) en position escamotée.

13. Broche selon la revendication 8, caractérisée par le fait que le loquet (132) est articulé sur un premier bord de la fenêtre (118), la fenêtre (118) possède une dent de verrouillage (119) sur un bord opposé, et la longueur du loquet (132) est supérieure à la distance séparant la zone d'articulation (133) de la dent de verrouillage (119).
